# EUROPÄISCHE PATENTSCHRIFT

(11) **EP 0 453 915 B1**
(45) Veröffentlichungstag und Bekanntmachung des Hinweises auf die Patenterteilung: **18.11.1993**
(21) Anmeldenummer: 91105921.0
(22) Anmeldetag: 13.04.1991
(51) Int. Cl.: A01N 43/653, A01N 55/00, A01N 25/02

(54) **Verwendung von N-Alkyl-lactamen als Kristallisationsinhibitoren**
Use of N-alkyl-lactams for inhibiting crystallization
Utilisation de lactames N-alkylés comme inhibiteurs de cristallisation

(30) Priorität: 27.04.1990 DE 4013523
(43) Veröffentlichungstag der Anmeldung: 30.10.1991
(73) Patentinhaber: BAYER AG, 51368 Leverkusen (DE)
(72) Erfinder: Horstmann, Heinz-Otto, Dr., W-5060 Bergisch Gladbach (DE); Wangermann, Klaus, Dr., W-4150 Krefeld (DE)

(56) Entgegenhaltungen:
- EP-A- 0 077 078
- EP-A- 0 095 242
- EP-A- 0 391 168
- EP-A- 0 391 171
- CHEMICAL ABSTRACTS, Band 84, Nr. 23, 7. Juni 1976, Seite 118, Zusammenfassung Nr. 160605p, Columbus, Ohio, US; & JP-A-74 092 231 (MITSUBISHI PETROCHEMICAL CO.) 03-09-1974

## Beschreibung

Die vorliegende Erfindung betrifft die neue Verwendung von N-Alkyl-lactamen zur Verhinderung der Kristallisation beim Ausbringen von wäßrigen Spritzbrühen auf Basis bestimmter fungizider Wirkstoffe.

In Spritzgeräten, die üblicherweise zur Ausbringung wäßriger Formulierungen von Pflanzenbehandlungsmitteln verwendet werden, sind mehrere Filter sowie Düsen vorhanden. So befinden sich zum Beispiel Saugfilter zwischen Ansaugteil und Tankpumpe und ferner Druckfilter, welche nach der Pumpe im Druckbereich angeordnet sind. Außerdem können auch Düsenfilter enthalten sein, die sich direkt vor den Spritzdüsen befinden. Alle diese Filter sowie auch die Düsen können bei der Ausbringung von wäßrigen Spritzbrühen auf Basis fester Wirkstoffe mehr oder weniger leicht durch auskristallisierenden Wirkstoff verstopfen.

Es ist bereits bekannt, daß die nachstehend genannten Azol-Derivate fungizid wirksam sind und in Form von wäßrigen Spritzbrühen auf Pflanzen und/oder deren Lebensraum appliziert werden können:
1-(2-Chlorphenyl)-2-(1-chlor-cycloprop-1-yl)-3-(1,2,4-triazol-1-yl)-propan-2-ol,
1-(4-Fluorphenyl)-1-(2-fluorphenyl)-2-(1,2,4-triazol-1-yl)-ethan-1-ol (Flutriafol),
1-(1,2,4-Triatol-1-yl)-2-(2,4-dichorphenyl)-hexan-2-ol (Hexaconazole),
1-[(Bis-(4-fluor-phenyl)- methyl-silyl)-methyl]-1H-(1,2,4-triazol) (Flusilazole),
1-(4-Chlorphenyl)-2-(1,2,4-triazol-1-yl)-4,4-dimethylpent-1-en-3-ol (Uniconazole),
1-(2,4-Dichlorphenyl)-2-(1,2,4-triazol-1-yl)-4,4-dimethyl-pent-1-en-3-ol (Diniconazole),
1-(4-Chlorphenyl)-1-(1-cyclopropyl-ethyl)-2-(1,2,4-triazol-1-yl)-ethan-1-ol (Cyproconazole) und
1-(4-Chlorphenyl)-3-phenyl-3-cyano-4-(1,2,4-triazol-1-yl)-butan (Myclobutanil).

(vgl. EP-A 0 297 345, EP-A 0 015 756, US-A 4 551 469, EP-A 0 068 813, DE-A 2 838 847, DE-A 3 010 560, DE-A 3 406 993 und DE-A 2 821 971).

Zur Herstellung derartiger Spritzbrühen lassen sich oberflächenaktive Stoffe, wie zum Beispiel Alkylarylpolyglykolether, einsetzen. Nachteilig bei der Verwendung dieser herkömmlichen Formulierungen ist aber, daß die Wirkstoffe zur Kristallisation neigen und sowohl Filter als auch Düsen der Spritzgeräte verstopfen können.

Aus der EP-A 0 095 242 ist bekannt, daß sich Formulierungen, die pestizid wirksame Stoffe, wie zum Beispiel bestimmte Azol-Derivate, eine organische Säure und ein polares Solvens enthalten, mit Wasser verdünnen und durch Spritzapplikation verwenden lassen. Der Einsatz von Lactamen oder anderen Substanzen zur Verhinderung von Kristallbildung wird nicht erwähnt.

Weiterhin geht aus der EP-A 0 077 078 hervor, daß N-Alkyl-lactame geeignet sind, um die Penetration von Pestiziden durch Membranen bei Pflanzen zu verbessern und dadurch die Wirksamkeit zu steigern. Eine Verwendung derartiger Lactame als Kristallisationshemmer beim Ausbringen verdünnter, wäßriger Formulierungen auf Basis von Azolfungiziden oder anderen pestiziden Wirkstoffen wird jedoch nicht offenbart.

Es wurde nun gefunden, daß sich N-Alkyl-lactame der Formel 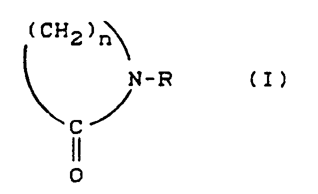
in welcher
- R: für Alkyl mit 6 bis 18 Kohlenstoffatomen steht und
- n: für die Zahlen 3, 4 oder 5 steht,

bei Ausbringen von wäßrigen Spritzbrühen die
A) 1-(2-Chlorphenyl)-2-(1-chlor-cycloprop-1-yl)-3-(1,2,4-triazol-1-yl)-propan-2-ol der Formel 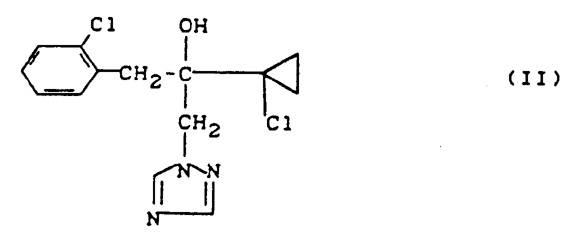 und/oder
   1-(4-Fluorphenyl)-1-(2-fluorphenyl)-2-(1,2,4-triazol-1-yl)-ethan-1-ol der Formel 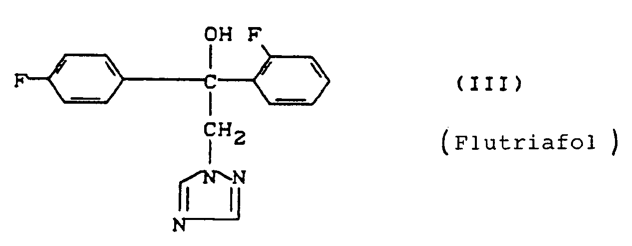 und/oder
   1-(1,2,4-Triazol-1-yl)-2-(2,4-dichlorphenyl)-hexan-2-ol der Formel 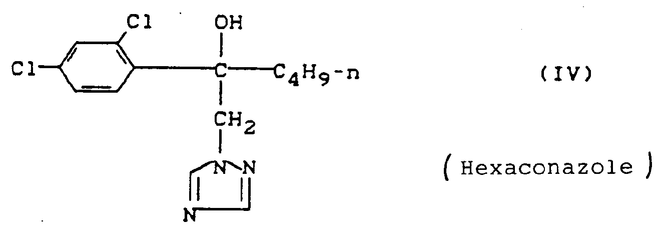 und/oder
   1-[(Bis(4-fluor-phenyl)- methyl-silyl)-methyl]-7-1H-(1,2,4-triazol) der Formel 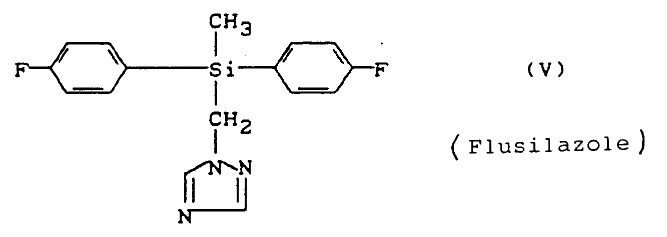 und/oder
   1-(4-Chlorphenyl)-2-(1,2,4-triazol-1-yl)-4,4-dimethyl-pent-1-en-3-ol der Formel 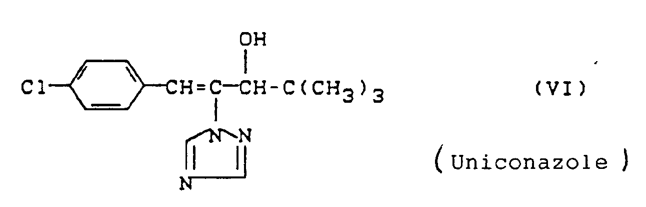 und/oder
   1-(2,4-Dichlorphenyl)-2-(1,2,4-triazol-1-yl)-4,4-dimethyl-pent-1-en-3-ol der Formel 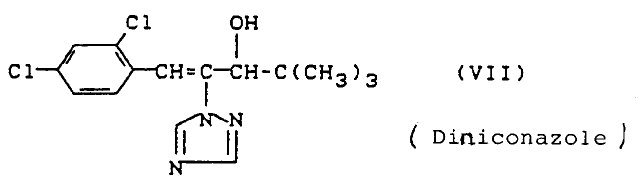 und/oder
   1-(4-Chlorphenyl)-1-(1-cyclopropyl-ethyl)-2-(1,2,4-triazol-1-yl)-ethan-1-ol der Formel 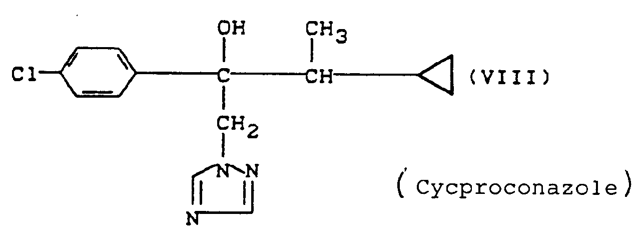 und/oder
   1-(4-Chlorphenyl)-3-phenyl-3-cycano-4-(1,2,4-triazol-1-yl)-butan der Formel 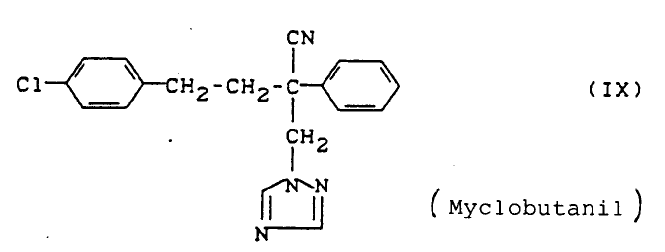 und
B) gegebenenfalls einen oder mehrere weitere Wirkstoffe sowie Zusatzstoffe

enthalten, zur Verhinderung der Kristallisation der Wirkstoffe der Formeln (II) bis (IX) verwenden lassen.

Es ist als äußerst überraschend zu bezeichnen, daß die Kristallisationsneigung von Wirkstoffen der Formeln (II) bis (IX) in der Spritzbrühe durch die erfindungsgemäße Verwendung von N-Alkyl-lactamen der Formel (I) stark herabgesetzt wird, Vor allem war nicht zu erwarten, daß N-Alkyl-lactame der Formel (I) wesentlich besser als andere vergleichbar wirkende Stoffe für den angegebenen Zweck geeignet sind.

Die Verwendung von N-Alkyl-lactamen der Formel (I) in waßrigen Formulierungen auf Basis der fungiziden Wirkstoffe der Formeln (II) bis (IX) weist eine Reihe von Vorteilen auf. So handelt es sich bei den N-Alkyllactamen der Formel (I) um Stoffe, die problemlos zu handhaben und auch in größeren Mengen verfügbar sind. Ferner wird durch den Einsatz der Stoffe der Formel (I) verhindert, daß beim Versprühen von wäßrigen Formulierungen, die Wirkstoffe der Formeln (II) bis (IX) enthalten, sowohl die Filter als auch die Düsen der der Spritzgeräte verstopfen. Vorteilhaft ist auch, daß N-Alkyl-lactame der Formel (I) im Pflanzenschutz keinerlei unerwünschte Nebenwirkungen ausüben.

Die erfindungsgemäß verwendbaren N-Alkyl-lactame sind durch die Formel (I) allgemein definiert. Vorzugsweise verwendbar sind diejenigen Stoffe der Formel (I), in denen
- R: für Alkyl mit 8 bis 14 Kohlenstoffatomen steht und
- n: für die Zahlen 3, 4 oder 5 steht.

Besonders bevorzugt verwendbar sind diejenigen Stoffe der Formel (I), in denen
- R: für Alkyl mit 8, 10 oder 12 Kohlenstoffatomen steht und
- n: für die Zahlen 3, 4 oder 5 steht.

Als Beispiele für N-Alkyl-lactame der Formel (I) seien genannt:
N-Dodecyl-caprolactam
N-Decyl-caprolactam
N-Octyl-caprolactam
N-Dodecyl-pyrrolidon
N-Decyl-pyrrolidon
N-Octyl-pyrrolidon
N-Dodecyl-valerolactam
N-Decyl-valerolactam
N-Octyl-valerolactam.

Die N-Alkyl-lactame der Formel (I) sind bereits bekannt (vgl. J. Org.Chem. 18, 1087 (1953); Ann. Chem. 596, 203 (1955); J. Amer. Chem. Soc, 69, 715 (1947); DE-B 1 160 268; EP-A 0 077 078 und WO 88/00 184).

Die Wirkstoffe der Formeln (II) bis (IX) sowie deren Verwendung zur Bekampfung phytopathogener Pilze sind ebenfalls bekannt (vgl. EP-A 0 297 345, EP-A 0 015 756, US- A 4 551 469, EP-A 0 068 813, DE-A 2 838 847, DE-A 3 010 560, DE-A 3 406 993 und DE-A 2 821 971). Dabei lassen sich die Wirkstoffe in üblichen Formulierungen einsetzen. Vorzugsweise erfolgt die Ausbringung in Form von wäßrigen Sprittbrühen.

In den erfindungsgemaß verwendbaren Spritzbrühen können neben den Wirkstoffen der Formeln (II) bis (IX) auch einer oder mehrere weitere Wirkstoffe enthalten sein. Vorzugsweise in Frage kommen dabei Verbindungen mit fungiziden Eigenschaften. Als Beispiele für derartige zusatzlich verwendbare Wirkstoffe seien genannt:
1-(4-Chlorphenoxy)-3,3-dimethyl-(1,2,4-triazol-1-yl)-butan-2-on (Triadimefon),
1-(4-Phenyl-phenoxy)-3,3-dimethyl-(1,2,4-triazol-1-yl)-butan-2-ol(Bitertanol),
N,N-Dimethyl-N'-phenyl (N'-fluordichlormethylthio)-sulfamid (Dichlofluanid),
N,N-Dimethyl-(N'-fluordichlormethylthio)-N'-(4-methyl-phenyl)-sulfamid (Tolylfluanid),
N-Trichlormethylmercapto-4-cyclohexen-1 ,2-dicarboxamid (Captan),
N-(1,1,2,2-Tetrachlorethyl-sulrenyl)-cis-4-cyclohexen-1,2-dicarboxamid (Captafol),
N-Trichlormethylthio-phthalimid (Folpet),
N-Dodecyl-guanidin-acetat (Dodine),
Tetrachlor-isophthalo-dinitril (Chlorothalonil), 4,5,6,7-Tetrachlorphthalid,
Zink-ethylen-bis-dithiocarbamat (Zineb),
Mangan-ethylen-bis-dithiocarbamat (Maneb),
Zink-ethylen-bis-dithiocarbamat/Mangan-ethylen-bis-dithiocarbamat (Mancozeb),
Zink-propylen-1,2-bis-dithiocarbamat (Propineb),
1-[3-(4-(1,1-Dimethylethyl)-phenyl)-2-methylpropyl]-piperidin (Fenpropidin),
N-Tridecyl-2,6-dimethyl-morpholin (Tridemorph),
N-Dodecyl-2,6-dimethyl-morpholin (Aldimorph),
2-[2-(2,4-Dichlorphenyl)-2-(2-propenyloxy)-ethyl]-imidazol (Imazalil),
N-[2-(2,4,6-Trichlorphenoxy)-ethyl]-N-propyl-1H-imidazol (Prochloraz),
1,2-Dimethyl-cyclopropan-1,2-dicarbonsäure-3,5-dichlorphenylimid (Procymidone),
2-Methoxycarbamoyl-benzimidazol (Carbendazim),
1-(Butylcarbamoyl)-2-benzimidazolmethylcarbamat (Benomyl),
2,4-Dichlor-6-(2'-chlorphenyl-amino)-1,3,4-triazin (Anilazine),
Bis-(8-Guanidin-O-octyl)-amin-triacetat (Guazatine),
1-(4-Chlorbenzyl)-1-cyclopentyl-3-phenyl-harnstoff (Pencycuron).

Als Zusatzstoffe, die in den erfindungsgemäß verwendbaren Spritzbrühen vorhanden sein können, kommen oberflächenaktive Stoffe, organische Verdünnungsmittel, Kältestabilisatoren und Haftmittel in Frage.

Dabei kommen als oberflächenaktive Stoffe nichtionogene und anionische Emulgatoren, wie Polyoxyethylen-Fettsäure-Ester, Polyoxyethylen-Fettalkohol-Ether, Alkylaryl-polyglykol-Ether, Alkylsulfonate, Alkylsulfate und Arylsulfonate in Betracht. Dabei können die Emulgatoren einzeln oder auch in Mischung eingesetzt werden. Vorzugsweise genannt seien
Polyoxyethylen-Sorbitan-Monolaurat mit durchschnittlich 20 Oxyethylen-Einheiten pro Molekül,
Polyoxyethylen-Sorbitan-Monopalmitat mit durchschnittlich 20 Oxyethylen-Einheiten pro Molekül,
Polyoxyethylen-Sorbitan-Monostearat mit durchschnittlich 20 Oxyethylen-Einheiten pro Molekül,
Sorbitan-Monolaurat,
Sorbitan-Monopalmitat,
Sorbitan-Monostearat,
Polyoxyethylen-oleylether mit durchschnittlich 10 Oxyethylen-Einheiten pro Molekül,
Polyoxyethylen-oleylether mit durchschnittlich 20 Oxyethylen-Einheiten pro Molekül,
Bis[α-methyl-(4-methyl-benzyl)]-phenyl-polyglykolether mit durchschnittlich 27 Oxyethylen-Einheiten pro Molekül,
Bis-[α-methyl-(4-n-dodecyl)]-phenyl-polyglykolether mit durchschnittlich 27 Oxyethylen-Einheiten pro Molekül,
Bis-(4-methyl-Benzyl)-phenyl-polyglykolether mit durchschnittlich 27 Oxyethylen-Einheiten pro Molekül,
Bis-(4-n-dodecyl-benzyl)-phenyl-polyglykolether mit durchschnittlich 27 Oxyethylen-Einheiten pro Molekül,
Tris-[α-methyl-(4-methyl-benzyl)]-phenyl-polyglykolether mit durchschnittlich 17 Oxyethylen-Einheiten pro Molekül,
Bis-(α-methyl-benzyl)-phenyl-polyglykolether mit durchschnittlich 17 Oxyethylen-Einheiten pro Molekül,
Tris-(α-methyl-benzyl)-phenyl-polyglykolether mit durchschnittlich 17 Oxyethylen-Einheiten pro Molekül,
Bis-(α-methyl-benzyl)-phenyl-polyglykolether mit durchschnittlich 27 Oxyethylen-Eiheiten pro Molekül,
Tris-(α-methyl-benzyl)-phenyl-polyglykolether mit durchscnittlich 27 Oxyethylen-Einheiten pro Molekül,
Bis-(α-methyl-benzyl)-phenyl-polyglykolether mit durchschnittlich 3 Oxyethylen-Einheiten pro Molekül,
Tris-(α-methyl-benzyl)-phenyl-polyglykolether mit durchschnittlich 3 Oxyethylen-Einheiten pro Molekül,
Nonylphenol-polyglykolether mit durchschnittlich 15 Oxyethylen-Einheiten pro Molekül,
Nonylphenol-diglykolether mit durchschnittlich 2 Oxyethylen-Einheiten pro Molekül,
n-Dodecyl-Natriumsulfonat,
Natrium-laurylsulfat,
4-(n-Nonyl)-phenyl-sulfonsaure-Natriumsalz,
4-(Tetrapropylen) -phenyl-sulfonsäure-Natriumsalz,
4-(i-Dodecyl)-phenyl-sulfonsäure-Ammoniumsalz,
4-(i-Dodecyl)-phenyl-sulfonsäure-Calciumsalz,
4-(n-Dodecyl)-phenyl-sulfonsäure-(2-hydroxyethyl)-ammoniumsalz,
4-(n-Dodecyl)-phenyl-sulfonsäure-bis-(2-hydroxyethyl)-ammoniumsalz,
4-(n-Dodecyl)-phenyl-sulfonsäure-tris-(2-hydroxyethyl)-ammoniumsalz,
4-(n-Dodecyl)-phenyl-sulfonsaure-Calciumsalz.

Die in der Praxis verwendeten Emulgatoren aus der Gruppe der Alkylaryl-polyglykol-Ether sind im allgemeinen Gemische aus mehreren Verbindungen. Insbesondere handelt es sich hierbei um Gemische aus Stoffen, die sich durch den Substitutionsgrad an dem mit der Oxyethylen-Einheit verbundenen Phenylring und die Zahl der Oxyethylen-Einheiten unterscheiden. Dadurch errechnen sich für die Zahl der Substituenten am Phenylring auch gebrochene Zahlen als Mittelwerte. Beispielsweise erwähnt seien Substanzen, für die sich folgende durchschnittliche Zusammensetzungen ergeben:

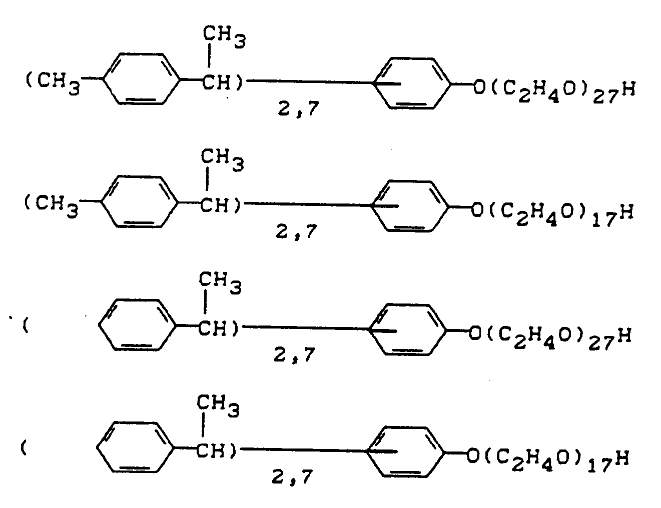

Als organische Verdünnungsmittel können in den erfindungsgemäß verwendbaren Spritzbrühen alle üblicherweise für derartige Zwecke einsetzbaren polaren und unpolaren organischen Solventien vorhanden sein. Vorzugsweise in Betracht kommen Ketone, wie Methyl-isobutyl-keton und Cyclohexanon, ferner Amide, wie Dimethylformamid, weiterhin cyclische Verbindungen, wie N-Methyl-pyrrolidon und Butyrolacton, darüberhinaus stark polare Solventien, wie Dimethylsulfoxid, ferner aromatische Kohlenwasserstoffe, wie Xylol, außerdem Ester, wie Propylenglykol-monomethylether-acetat, Adipinsäure-dibutylester, Essigsäurehexylester, Essigsäure-heptylester, Zitronensäure-tri-n-butylester und Phthalsäure-di-n-butylester, und weiterhin Alkohole, wie Ethanol, n- und i-Propanol, n- und i-Butanol, n- und i-Amylalkohol, Benzylalkohol und 1-Methoxy-2-propanol.

Als Kältestabilisatoren können in den erfindungsgemäß verwendbaren Spritzbruhen alle üblicherweise für diesen Zweck geeigneten Stoffe enthalten sein. Vorzugsweise in Frage kommen Harnstoff, Glycerin und Propylenglykol.

Als Haftmittel können in den erfindungsgemäß verwendbaren Spritxbrühen alle üblicherweise für diesen Zweck geeigneten Stoffe eingesetzt werden. Vorzugsweise in Betracht kommen Haftmittel wie Carboxymethylcellulose, natürliche und synthetische pulverige, körnige oder latexförmige Polymere, wie Gummi arabicum, Polyvinylalkohol, Polyvinylacetat, sowie natürliche Phospholipide, wie Kephaline und Lecithine, und auch synthetische Phospholipide, Weitere Additive können mineralische und vegetabile Öle sein.

Im übrigen ist in den erfindungsgemäß verwendbaren Sprittbrühen jeweils Wasser enthalten.

Bei der erfindungsgemäßen Verwendung von N-Alkyllactamen der Formel (I) können eines oder auch mehrere dieser N-Alkyl-lactame in den Spritzbrühen eingesetzt werden.

Die Wirkstoffkonzentrationen können in den erfindungsgemäß verwendbaren Spritzbrühen innerhalb eines bestimmten Bereiches variiert werden. Im allgemeinen liegen die Wirkstoffkonzentrationen zwischen 0,0001 und 3 Gewichtsprozent, vorzugsweise zwischen 0,001 und 2 Gewichtsprozent.

Auch das Verhältnis von Wirkstoff zu N-Alkyl-lactam der Formel (I) kann innerhalb eines bestimmten Bereiches variiert werden. Im allgemeinen liegt das Gewichtsverhältnis von Wirkstoff aus der Gruppe (A) zu N-Alkyllactam der Formel (I) zwischen 1:0,2 und 1:6, vorzugsweise zwischen 1:0,6 und 1:4.

Die Mengen an weiteren Wirkstoffen bzw. Zusatzstoffen können in den erfindungsgemäß verwendbaren Spritzbrühen innerhalb eines größeren Bereiches variiert werden, Sie liegen in der Größenordnung wie es üblicherweise in derartigen wäßrigen Spritzbrühen der Fall ist.

Die Herstellung der erfindungsgemäß verwendbaren Spritzbrühen erfolgt nach üblichen Methoden. Im allgemeinen geht man so vor, daß man zunächst ein Konzentrat herstellt, indem man bei Temperaturen zwischen 10 und 30°C die benötigten Komponenten in beliebiger Reihenfolge zusammengibt und homogen vermischt und das entstehende Gemisch gegebenenfalls filtriert. Zur Herstellung der anwendungsfertigen Spritzbrühen wird die konzentrierte Formulierung gegebenenfalls unter Rühren und/oder Pumpen mit der jeweils gewünschten Menge an Wasser so vermischt, daß die Formulierung in Wasser gleichmäßig und feindispers verteilt wird.

Es ist auch möglich, eines oder mehrere N-Alkyl-lactame der Formel (I) dann hinzuzugeben, wenn das Konzentrat mit Wasser zur anwendungsfertigen Spritzbrühe verdünnt wird.

Sowohl zur Zubereitung der konzentrierten Formulierungen als auch zur Herstellung und Ausbringung der erfindungsgemäß verwendbaren Spritzbrühen lassen sich alle üblicherweise für diese Zwecke geeigneten Mischapparate und Spritzgeräte einsetzen.

Durch die Verwendung von einem oder mehreren N-Alkyllactamen der Formel (I) in wäßrigen Spritzbrühen auf Basis von Wirkstoffen der Formeln (II) bis (IX) wird die Auskristallisation von Wirkstoff sowohl in der konzentrierten, handelsüblichen Formulierung als auch beim Ausbringen der daraus hergestellten wäßrigen Spritzbrühen in den Filtern und Austrittsöffnungen der Spritzgeräte entweder ganz unterbunden oder soweit verhindert, daß die Ausbringung der Spritzbrühen nicht beeinträchtigt ist.

Die Herstellung und das Kristallisationsverhalten der erfindungsgemäß verwendbaren Spritzbrühen werden durch die folgenden Beispiele veranschaulicht.

### Herstellungsbeispiele

### Beispiel 1

Zur Herstellung einer Formulierung werden
13,0 Gew.-Teile 1-(2-Chlorphenyl)-2-(1-chlor-cycloprop-1-yl)-3-(1,2,4-triazol-1-yl)-propan-2-ol der Formel 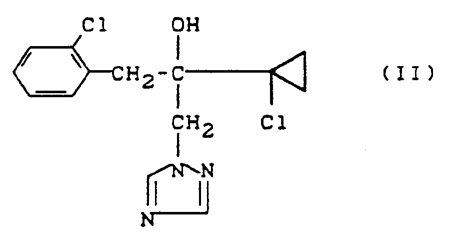
40,0 Gew.-Teile N-(n-Dodecyl)-caprolactam,
4,0 Gew.-Teile des Emulgators der durchschnittlichen Zusammensetzung der Formel 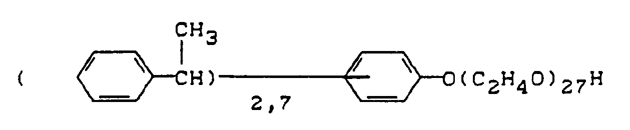
4,0 Gew.-Teile 4-(n-Dodecyl)-phenylsulfonsäure-(2-hydroxyethyl)-ammoniumsalz,
4,0 Gew.-Teile des Emulgators der durchschnittlichen Zusammensetzung der Formel 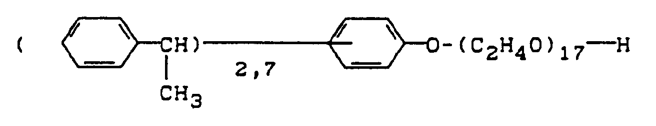
8,0 Gew.-Teile Nonylphenol-polyglykolether mit durchschnittlich 15 Oxyethylen-Einheiten pro Molekül und
27,0 Gew.-Teile N-Methyl-pyrrolidon
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 1 Gew.-% enthalten ist.

### Beispiel 2

Zur Herstellung einer Formulierung werden
13,0 Gew.-Teile 1-(2-Chlorphenyl)-2-(1-chlor-cycloprop-1-yl)-3-(1,2,4-triazol-1-yl)-propan-2-ol der Formel 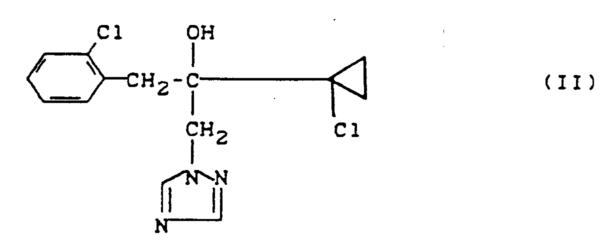
40,0 Gew.-Teile N-(n-Octyl)-pyrrolidon,
10,0 Gew.-Teile Adipinsäure-di-butylester,
4,0 Gew.-Teile des Emulgators der durchschnittlichen Zusammensetzung der Formel 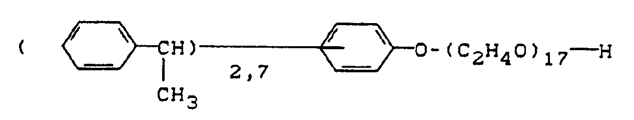
8,0 Gew.-Teile Nonylphenol-polyglykolether mit durchschnittlich 15 Oxyethylen-Einheiten pro Molekül,
4,0 Gew.-Teile des Emulgators der durchschnittlichen Zusammensetzung der Formel 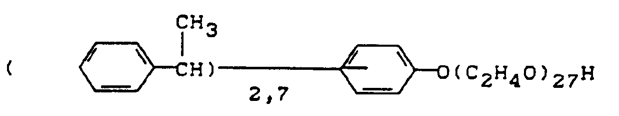
4,0 Gew.-Teile 4-(n-Dodecyl)-phenylsulfonsäure-(2-hydroxyethyl)-ammoniumsalz und
17,0 Gew.-Teile N-Methyl-pyrrolidon,
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 1 Gew.-% enthalten ist.

### Vergleichsbeispiel A

Zur Herstellung einer Formulierung werden
13,0 Gew.-Teile 1-(2-Chlorphenyl)-2-(1-chlor-cycloprop-1-yl)-3-(1,2,4-triazol-1-yl)-propan-2-ol der Formel 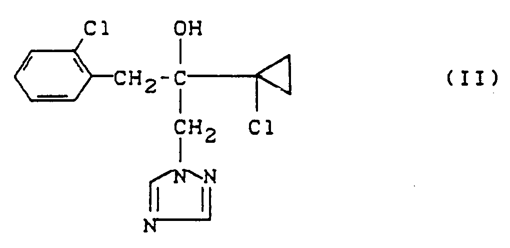
4,0 Gew.-Teile des Emulgators der durchschnittlichen Zusammensetzung der Formel 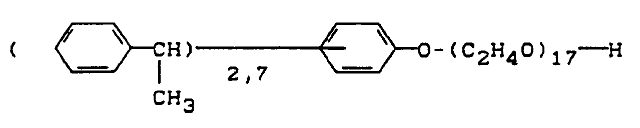
8,0 Gew.-Teile Nonylphenol-polyglykolether mit durchschnittlich 15 Oxyethylen-Einheiten pro Molekül,
4,0 Gew.-Teile des Emulgators der durchschnittlichen Zusammensetzung der Formel 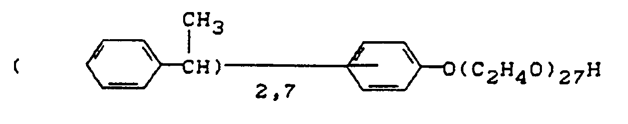
4,0 Gew.-Teile 4-(n-Dodecyl)-phenylsulfonsäure-(2-hydroxyethyl)-ammoniumsalz und
67,0 Gew.-Teile N-Methyl-pyrrolidon,
bei Raumtemperatur vermischt und zu einer homogenen Flüssigkeit verrührt. Aus dem so erhaltenen Konzentrat wird durch Mischen mit Wasser eine Spritzbrühe hergestellt, in welcher das Konzentrat in einer Konzentration von 1 Gew.-% enthalten ist.

### Verwendungsbeispiel I

Zur Prüfung der Kristallisationseigenschaften werden jeweils 250 ml einer wäßrigen Spritzbrühe, die einen Konzentratgehalt von 1 Gew.-% aufweist, in einer Durchflußapparatur mit Hilfe einer Pumpe 15 Minuten lang durch ein feinmaschiges Sieb umgepumpt. Nach achtmaliger Wiederholung dieses Vorganges mit jeweils 250 ml frisch eingesetzter Spritzbrühe wird die Kristallabscheidung an dem Sieb photographiert.

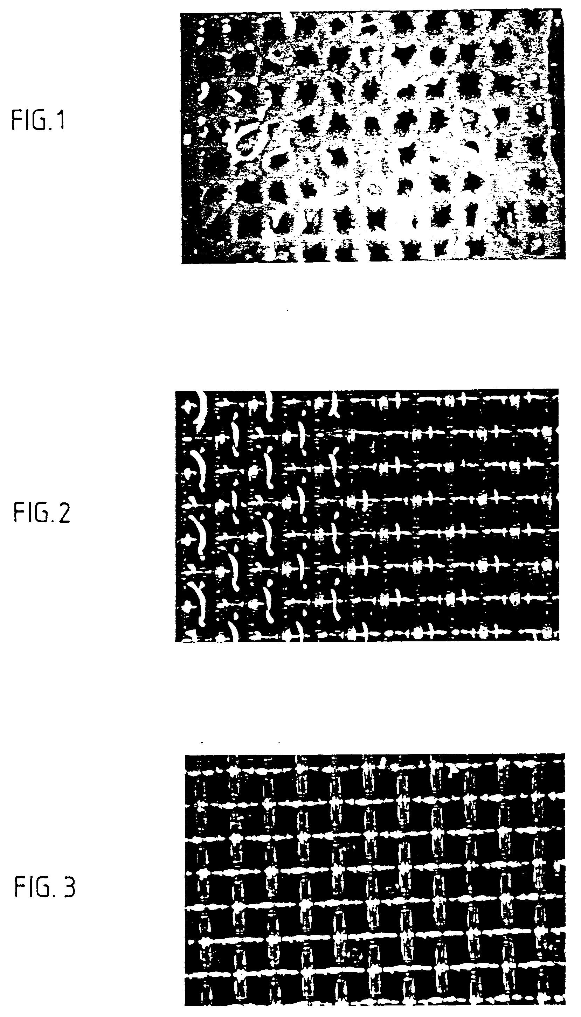

Die entsprechenden Photographien sind in den Abbildungen 1 bis 3 (Fig. 1 bis 3) wiedergegeben.

Fig. 1 zeigt in 25-facher Vergrößerung die Kristallabscheidung, die beim Durchpumpen von acht 250 ml Ansatzen der keinen Kristallisationsinhibitor enthaltenden Spritzbrühe gemäß Beispiel (A) am Sieb entsteht.

Fig. 2 zeigt in 25-facher Vergrößerung die Kristallabscheidung, die beim Durchpumpen von acht 250 ml Ansätzen der N-(n-Dodecyl)-caprolactam enthaltenden Spritzbrühe gemäß Beispiel (1) am Sieb entsteht.

Fig. 3 zeigt in 25-facher Vergrößerung die Kristallabscheidung, die beim Durchpumpen von acht 250 ml Ansätzen der N-(n-Octyl)-pyrrolidon enthaltenden Spritzbrühe gemäß Beispiel (2) am Sieb entsteht.

Aus den Abbildungen ist erkennbar, daß das Sieb im Falle der bekannten Spritzbrühe gemäß Beispiel (A) teilweise verstopft, während im Falle der Spritzbrühen gemäß Beispielen (1) und (2) keine Kristallabscheidung beobachtet wird.

## Patentansprüche

1. Verwendung von N-Alkyl-lactamen der Formel 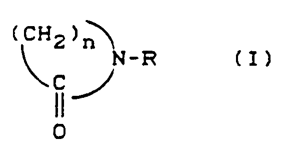 in welcher
R für Alkyl mit 6 bis 18 Kohlenstoffatomen steht und
n für die Zahlen 3, 4 oder 5 steht,
beim Ausbringen von wäßrigen Spritzbrühen die
A) 1-(2-Chlorphenyl)-2-(1-chlor-cycloprop-1-yl)-3-(1,2,4-triazol-1-yl)-propan-2-ol der Formel 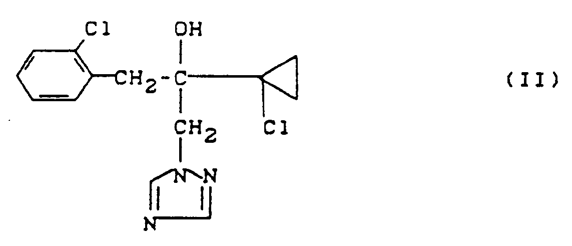 und/oder
1-(4-Fluorphenyl)-1-(2-fluorphenyl)-2-(1,2,4-triazol-1-yl)-ethan-1-ol der Formel 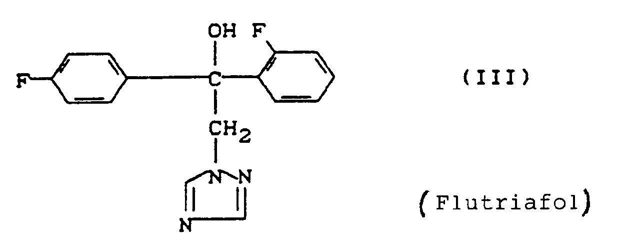 und/oder
1-(1,2,4-Triazol-1-yl)-2-(2,4-dichlorphenyl)-hexan-2-ol der Formel 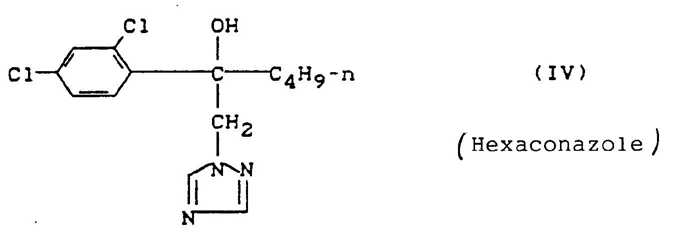 und/oder
1-[(Bis-(4-fluor-phenyl)- methyl-silyl)-methyl]-1H-(1,2,4-triazol) der Formel 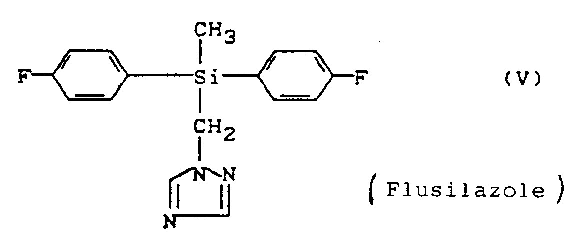 und/oder
1-(4-Chlorphenyl)-2-(1,2,4-triazol-1-yl)-4,4-dimethyl-pent-1-en-3-ol der Formel 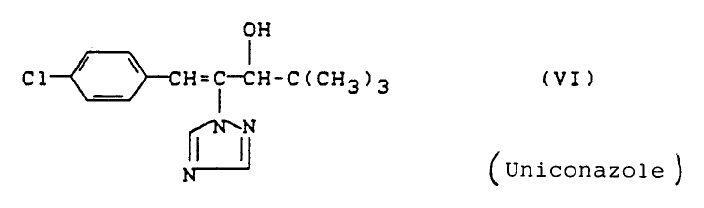 und/oder
1-(2,4-Dichlorphenyl)-2-(1,2,4-triazol-1-yl)-4,4-dimethyl-pent-l-en-3-ol der Formel 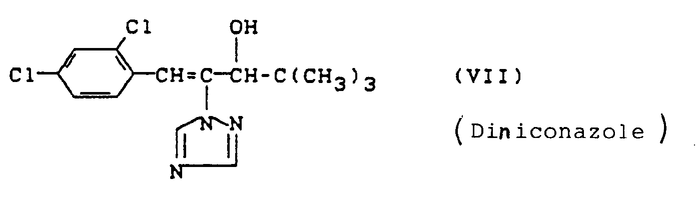 und/oder
1-(4-Chlorphenyl)-1-(1-cyclopropyl-ethyl)-2-(1,2,4-triatol-1-yl)-ethan-1-ol der Formel 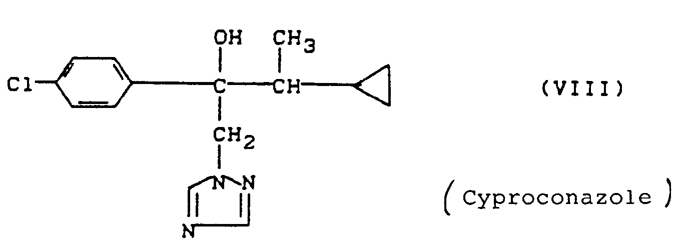 und/oder
1-(4-Chlorphenyl)-3-phenyl-3-cyano-4-(1,2,4-triazol-1-yl)-butan der Formel 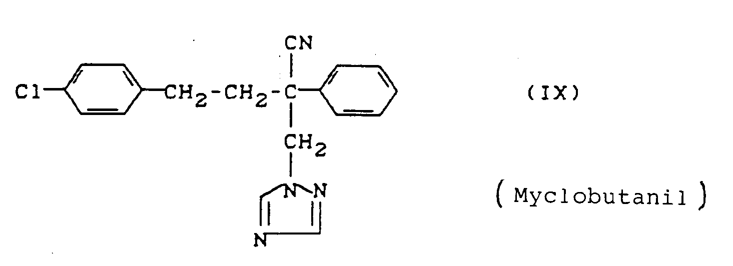 und
B) gegebenenfalls einen oder mehrere weitere Wirkstoffe sowie Zusatzstoffe
enthalten,
zur Verhinderung der Kristallisation der Wirktoffe der Formeln (II) bis (IX).

2. Verwendung gemäß Anspruch 1, dadurch gekennzeichnet, daß man N-(n-Dodecyl)-caprolactam einsetzt.

3. Verwendung gemäß Anspruch 1, dadurch gekennzeichnet, daß man N-(n-Octyl)-pyrrolidon einsetzt.

4. Verwendung gemäß Anspruch 1, dadurch gekennzeichnet, daß man N-(n-Dodecyl)-pyrrolidon einsetzt.

5. Verwendung gemäß Anspruch 1, dadurch gekennzeichnet, daß man ein Gemisch aus N-(n-Octyl)-pyrrolidon und N-(n-Dodecyl)-pyrrolidon einsetzt.

6. Verfahren zur Verhinderung der Kristallisation von Wirkstoffen der Formeln (II) bis (IX) gemäß Anspruch 1 beim Ausbringen von wäßrigen Spritzbrühen, die einen oder mehrere Wirkstoffe der Formeln (II) bis (IX) enthalten, dadurch gekennzeichnet, daß man den Spritzbrühen mindestens ein N-Alkyl-lactam der Formel (I) gemäß Anspruch 1 zusetzt.

## Claims

1. Use of N-alkyl-lactams of the formula 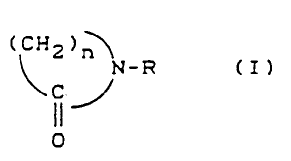 in which
R represents alkyl having 6 to 18 carbon atoms and
n represents the numbers 3, 4 or 5,
during application of aqueous spray liquors which contain
A) 1-(2-chlorophenyl)-2-(1-chloro-cycloprop-1-yl)-3-(1,2,4-triazol-1-yl)-propan-2-ol of the formula 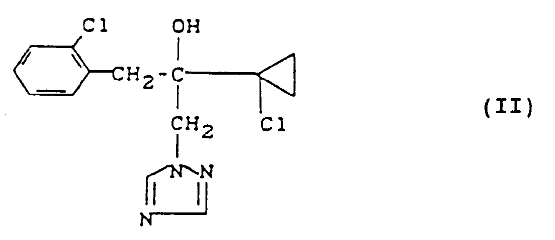 and/or
1-(4-fluorophenyl)-1-(2-fluorophenyl)-2-(1,2,4-triazol-1-yl)-ethan-1-ol of the formula 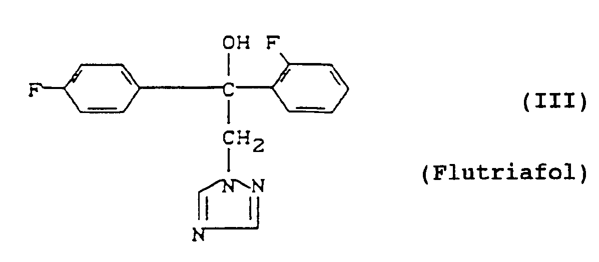 and/or
1-(1,2,4-triazol-1-yl)-2-(2,4-dichlorophenyl)-hexan-2-ol of the formula 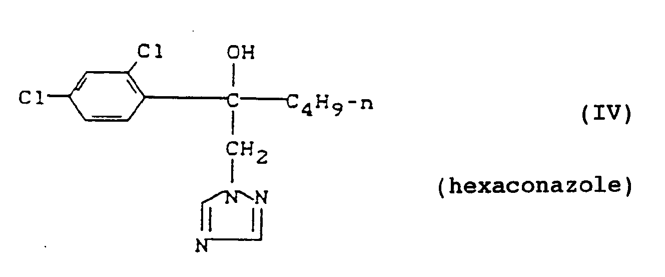 and/or
1-[(bis-(4-fluoro-phenyl)-methyl-silyl)-methyl]-1H-(1,2,4-triazole) of the formula 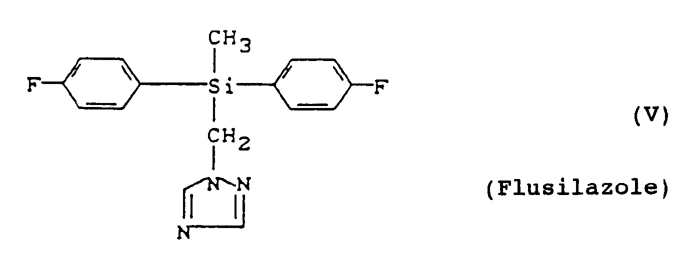 and/or
1-(4-chlorophenyl)-2-(1,2,4-triazol-1-yl)-4,4-dimethyl-pent-1-en-3-ol of the formula 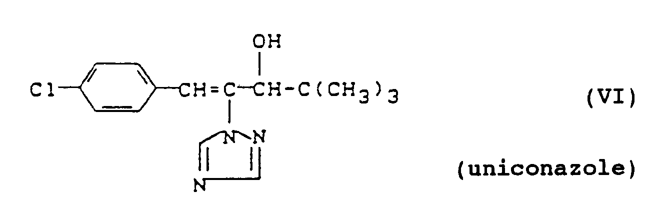 and/or
1-(2,4-dichlorophenyl)-2-(1,2,4-triazol-1-yl)-4,4-dimethyl-pent-1-en-3-ol of the formula 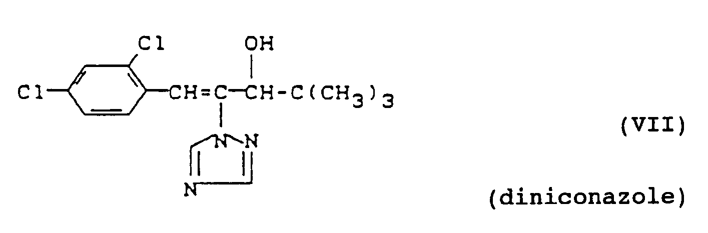 and/or
1-(4-chlorophenyl)-1-(1-cyclopropyl-ethyl)-2-(1,2,4-triazol-1-yl)-ethan-1-ol of the formula 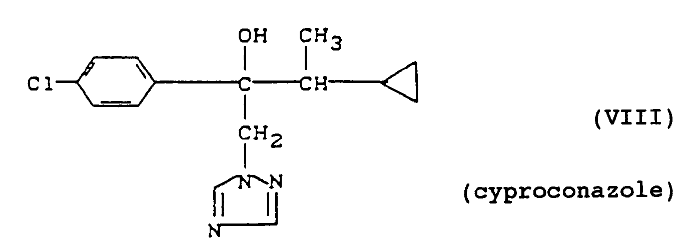 and/or
1-(4-chlorophenyl)-3-phenyl-3-cyano-4-(1,2,4-triazol-1-yl)-butane of the formula 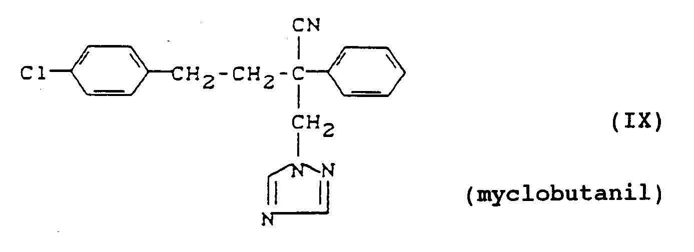 and
B) if desired, one or more further active compounds and additives
for the prevention of crystallization of the active compounds of the formulae (II) to (IX).

2. Use according to Claim 1, characterized in that N-(n-dodecyl)-caprolactam is employed.

3. Use according to Claim 1, characterized in that N-(n-octyl)-pyrrolidone is employed.

4. Use according to Claim 1, characterized in that N-(n-dodecyl)-pyrrolidone is employed.

5. Use according to Claim 1, characterized in that a mixture of N-(n-octyl)-pyrrolidone and N-(n-dodecyl)-pyrrolidone is employed.

6. Process for the prevention of crystallization of active compounds of the formulae (II) to (IX) according to Claim 1 during application of aqueous spray liquors which contain one or more active compounds of the formulae (II) to (IX), characterized in that at least one N-alkyl-lactam of the formula (I) according to Claim 1 is added to the spray liquors.

## Revendications

1. Utilisation de N-alkyllactames de formule 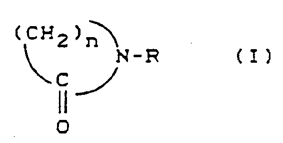 dans laquelle
R représente un groupe alkyle en C₆-C₁₈ et
n est égal à 3,4 ou 5,
à l'application de bouillies de pulvérisation aqueuses contenant
A) du 1-(2-chlorophényl)-2-(1-chloro-cyclopropa-1-yl)-3-(1,2,4-triazole-1-yl)-propane-2-ol) de formule 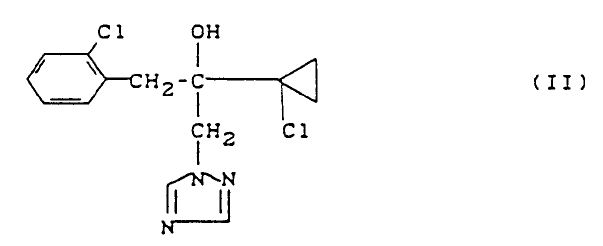 et/ou
du 1-(4-fluorophényl)-1-(2-fluorophényl)-2-(1,2,4-triazole-1-yl)-éthane-1-ol de formule 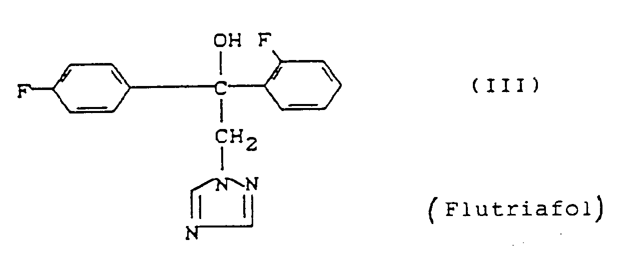 et/ou
du 1-(1,2,4-triazole-1-yl)-2-(2,4-dichlorophényl)-hexane-2-ol de formule 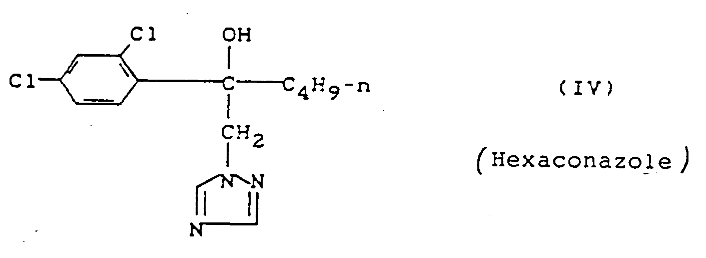 et/ou
du 1-[(bis(4-fluoro-phényl)-méthyl-silyl)-méthyl]-1H-(1,2,4-triazole) de formule 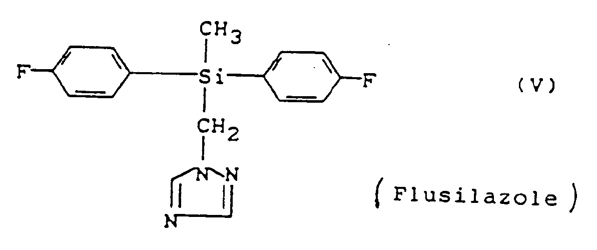 et/ou
du 1-(4-chlorophényl)-2-(1,2,4-triazole-1-yl)-4,4-diméthyl-penta-1-ène-3-ol de formule 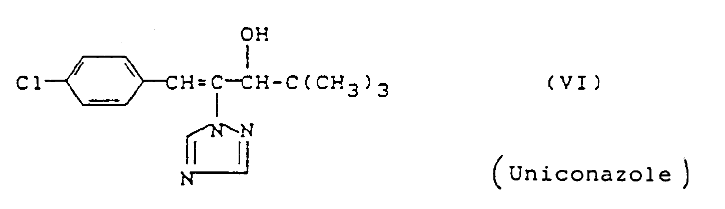 et/ou
du 1-(2,4-dichlorophényl)-2-(1,2,4-triazole-1-yl)-4,4-diméthyl-penta-1-ène-3-ol de formule 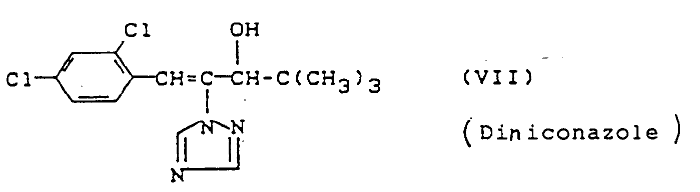 et/ou
du 1-(4-chlorophényl)-1-(1-cyclopropyl-éthyl)-2-(1,2,4-triazole-1-yl)-éthane-1-ol de formule 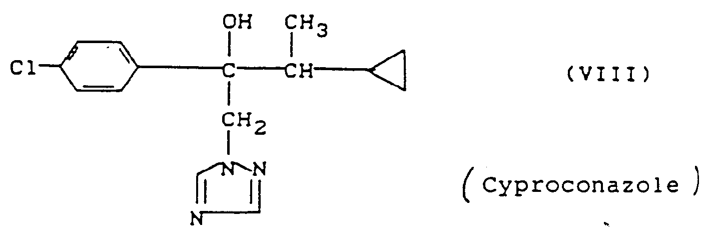 et/ou
du 1-(4-chlorophényl)-3-phényl-3-cyano-4-(1,2,4-triazole-1-yl)-butane de formule 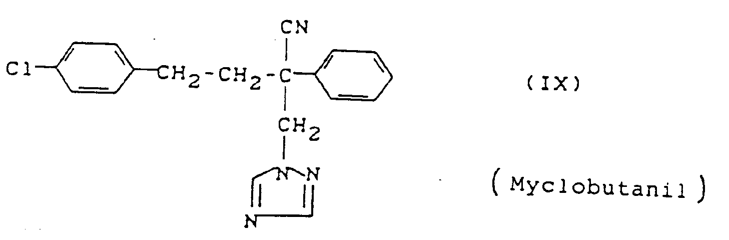 et
B) le cas échéant une ou plusieurs autres substances actives et des additifs;
pour empêcher la cristallisation des substances actives de formules II à IX.

2. Utilisation selon la revendication 1, caractérisée en ce que l'on utilise le N-(n-dodécyl)-caprolactame.

3. Utilisation selon la revendication 1, caractérisée en ce que l'on utilise la N-(n-octyl)-pyrrolidone.

4. Utilisation selon la revendication 1, caractérisée en ce que l'on utilise la N-(n-dodécyl)-pyrrolidone.

5. Utilisation selon la revendication 1, caractérisée en ce que l'on utilise un mélange de N-(n-octyl)-pyrrolidone et de N-(n-dodécyl)-pyrrolidone.

6. Procédé pour empêcher la cristallisation des substances actives de formules IIà IX selon la revendication 1 à l'application de bouillies de pulvérisation aqueuses contenant une ou plusieurs de ces substances actives, caractérisé en ce que l'on ajuste aux bouillies de pulvérisation ou moins un N-alkyllactame de formule I selon la revendication 1.
